# EUROPEAN PATENT APPLICATION

(11) **EP 4 791 017 A1**
(43) Date of publication of application: **12.08.2026**
(21) Application number: 24888896.8
(22) Date of filing: 22.08.2024
(51) Int. Cl.: H04N 23/60, H04N 23/57, H04N 23/90

(54) **ELECTRONIC DEVICE COMPRISING CAMERA, AND OPERATING METHOD THEREOF**

(30) Priority: 08.11.2023 KR 20230153786; 26.12.2023 KR 20230191509
(71) Applicant: Samsung Electronics Co., Ltd., Suwon-si, Gyeonggi-do 16677 (KR)
(72) Inventor: LEE, Seungwook, Suwon-si Gyeonggi-do 16677 (KR); PARK, Youngjun, Suwon-si Gyeonggi-do 16677 (KR); BONG, Yeonjong, Suwon-si Gyeonggi-do 16677 (KR); YOON, Jehan, Suwon-si Gyeonggi-do 16677 (KR); YOUN, Joonho, Suwon-si Gyeonggi-do 16677 (KR); LEE, Wonseok, Suwon-si Gyeonggi-do 16677 (KR); JEONG, Seokyoung, Suwon-si Gyeonggi-do 16677 (KR)
(74) Representative: Nederlandsch Octrooibureau
(86) International application number: PCT/KR2024/012478
(87) International publication number: WO 2025/100700

(57) **Abstract**

An electronic device of the disclosed embodiments may comprise a memory and a camera. The electronic device can provide, to a camera application, an image stream obtained using a camera function by determining whether the image stream can be provided using the camera function.

## Description

### [Technical Field]

The disclosure relates to an electronic device comprising a camera and an operating method thereof.

### [Background Art]

With the development of digital technology, various types of electronic devices such as mobile communication terminals, personal digital assistants (PDAs), electronic schedulers, smartphones, tablet personal computers (PCs) or wearable devices are widely used. Electronic devices may provide various functions. For example, electronic devices may provide at least one function by executing at least one application in foreground and/or background.

An electronic device may provide various functions by using a designated operating system (for example, Android^{™} operating system). For example, an electronic device may support a plurality of functions provided by using a camera.

The above information is presented as related-art only to assist with an understanding of the disclosure. No determination or assertion is made as to whether any of the above might be applicable as prior art with regard to the disclosure.

### [Disclosure of Invention]

### [Solution to Problem]

According to an embodiment, an electronic device may include a camera, at least one processor, and a memory configured to store instructions, a first camera application using a first application programming interface (API) and a second camera application using a second API. When being executed by the at least one processor, the instructions may cause the electronic device to request an operation of the camera to acquire a first image stream by the second camera application, based on a first camera identifier. When being executed by the at least one processor, the instructions may cause the electronic device to determine whether to provide the first image stream using a camera function which is executed by invoking the first API, based on first stream information related to the first image stream. When being executed by the at least one processor, the instructions may cause the electronic device to initiate the operation of the camera using a second camera identifier, based on determining that the first image stream is provided using the camera function. When being executed by the at least one processor, the instructions may cause the electronic device to provide the first image stream acquired using the camera function to the second camera application.

According to an embodiment, an operating method of an electronic device including a memory in which a first camera application using a first API and a second camera application using a second API are stored, and a camera may include requesting an operation of the camera to acquire a first image stream by the second camera application, based on a first camera identifier. The method may further include determining whether to provide the first image stream using a camera function which is executed by invoking the first API, based on first stream information related to the first image stream. The method may further include initiating the operation of the camera using a second camera identifier, based on determining that the first image stream is provided using the camera function. The method may further include providing the first image stream acquired using the camera function to the second camera application.

According to an embodiment, there is provided a computer-readable non-transitory recording medium on which an instruction to control an electronic device is recorded, the electronic device including a memory in which a first camera application using a first API and a second camera application using a second API are stored, and a camera, the recording medium including an instruction to request an operation of the camera to acquire a first image stream by the second camera application, based on a first camera identifier. The recording medium may further include an instruction to determine whether to provide the first image stream using a camera function which is executed by invoking the first API, based on first stream information related to the first image stream. The recording medium may further include an instruction to initiate the operation of the camera using a second camera identifier, based on determining that the first image stream is provided using the camera function. The recording medium may further include an instruction to provide the first image stream acquired using the camera function to the second camera application.

### [Brief Description of Drawings]

FIG. 1 is a block diagram of an electronic device in a network environment according to various embodiments.
FIG. 2 is a block diagram of an electronic device according to an embodiment.
FIG. 3 is a block diagram to explain modules included in an electronic device according to an embodiment.
FIG. 4 is a view to explain a configuration of stream information related to image stream data requested by a camera application according to an embodiment.
FIG. 5 is a flowchart illustrating a process in which an electronic device provides an image stream acquired by using a camera function to a camera application according to an embodiment.
FIG. 6 is a flowchart illustrating a process in which an electronic device determines whether to provide an image stream using a camera function according to an embodiment.
FIG. 7 is a flowchart illustrating a process in which an electronic device initiates the operation of a camera according to an embodiment.
FIG. 8 is a view to explain a flow of data between modules included in an electronic device according to an embodiment.
FIG. 9 is a flowchart illustrating a process in which an electronic device provides an image stream acquired by using a camera function to a camera application by setting metadata according to an embodiment.
FIG. 10 is a view to explain a flow of data between modules included in an electronic device according to an embodiment.
FIG. 11 is a flowchart illustrating a process in which an electronic device provides a stream combination to a hardware abstraction layer (HAL) according to an embodiment.
FIG. 12 is a view to explain a flow of data between modules included in an electronic device according to an embodiment.

### [Mode for the Invention]

A user may use a camera application to use a camera of an electronic device. For example, a user may shoot a still image, a moving image by controlling a camera using a native camera application or a third-party camera application. The native camera application may be a camera application that is developed by a manufacturer of an electronic device or in collaboration with a corporation related to the manufacturer of the electronic device. The native camera application may be an application that controls a camera by using a native camera application programming interface (API) to be used only in the electronic device released by the manufacturer. The native camera application may be already loaded in the electronic device when the electronic device is released. The third-party camera application may be a camera application that is developed by a corporation unrelated to the manufacturer of the electronic device. The third-party camera application may be a camera application that is developed to be used universally through multiple electronic devices independently from the manufacturer of the electronic device. For example, the third-party camera application may be a camera application that is developed to control a camera using a Google standard camera API.

The manufacturer of the electronic device may provide a user with image data that is acquired by a camera function specialized for the native camera application by using the native camera application. The camera function specialized for the native camera application may include an image processing function that is executed by invoking the native camera API. For example, the camera function specialized for the native camera application may include a function of enhancing quality of image data acquired through the camera. Specifically, the camera function specialized for the native camera application may include a multi-frame synthesis function for noise removal, a multi-frame synthesis function for high dynamic range (HDR), a video ultra low light (VIULL) function or an electrical image stabilization (EIS) function. The above-described example is just for explaining examples of specific embodiments and is not limited thereto.

The electronic device may use the camera function specialized for the native camera application only if a predetermined condition is satisfied. Typically, the predetermined condition may be set by the manufacturer of the electronic device. Accordingly, the third-party camera application may not generate an image stream using a specialized camera function since the predetermined condition is not known to the third-party camera application.

There may be a camera application that is primarily used according to preference of the user of the electronic device. When the user of the electronic device primarily uses the third-party camera application, the user may not be provided with image data (for example, image data of high image quality) generated by using the camera function specialized for the native camera application.

According to disclosed embodiments, even when a user executes a third-party camera application using an electronic device, the user may be provided with image data which is generated by using a camera function specialized for a native camera application.

The technical objects to be achieved by the disclosure are not limited to those mentioned above, and other technical objects that are not mentioned above may be clearly understood to those skilled in the art based on the description provided below.

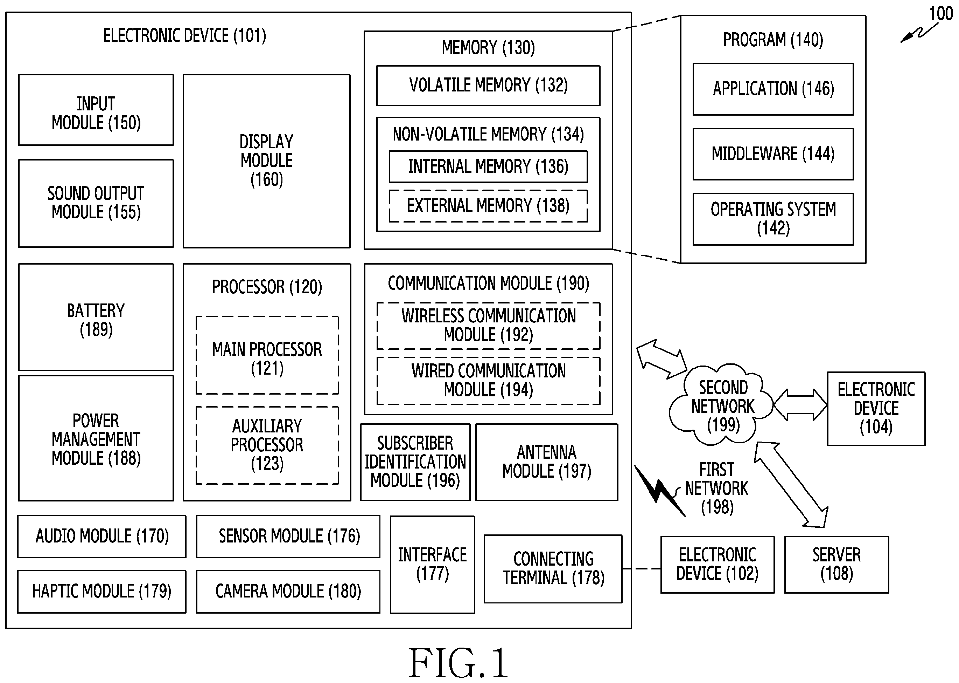

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

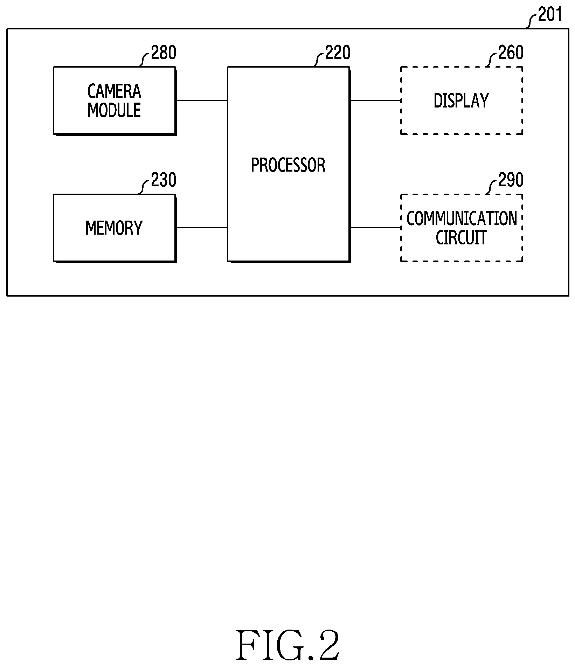

FIG. 2 is a block diagram of an electronic device according to an embodiment.

Referring to FIG. 2, an electronic device 201 according to an embodiment may include a camera module 280, a memory 230, and a processor 220. The electronic device 201 according to an embodiment may further include at least one of a display 260 or a communication circuit 290. The electronic device 201, the processor 220, the memory 230, the camera module 280, the display 260, the communication circuit 290 may correspond to the electronic device 101, the processor 120, the memory 130, the camera module 180, the display module 160, and the communication module 190 described above with reference to FIG. 1, respectively. However, the components of the electronic device 201 are illustrated in FIG. 2 for explanation of an embodiment, and the electronic device 201 may include more components than the components illustrated in FIG. 2, or may include other components which replace at least some components. For example, the memory 230 is not limited to a storage medium included in the electronic device 201 and may include a cloud repository external to the electronic device 201.

According to an embodiment, one or more processors 220 may be configured. For example, the processor 220 may include a main processor (for example, an application processor (AP), etc.) and an auxiliary processor (for example, a neural processing unit (NPU), a graphics processing unit (GPU), etc.). For example, the processor 220 may include a plurality of operation cores.

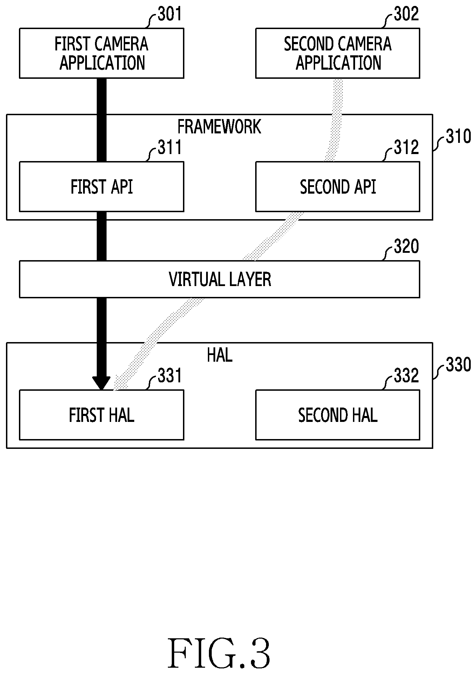

According to an embodiment, the processor 220 may be operatively connected with the memory 230. The processor 220 may execute instructions stored in the memory 230. The processor 220 may perform diverse data processing or operations by executing the instructions. The processor 220 may control components included in the electronic device 201 by executing the instructions. For example, the processor 220 may control at least one of the memory 230, the display 260, the camera module 280, the communication circuit 290. The processor 220 may compute and may control components included in the electronic device according to the instructions to cause the electronic device to perform operations which will be described below with reference to FIGS. 3 to 12.

According to an embodiment, the processor 220 may execute a camera application. The camera application may be an application that acquires image data by using a camera included in the camera module 280. For example, the camera application may be an application that acquires at least one of preview image data, still image data or moving image data for an image to be shot through a camera. For example, the camera application may include an application that streams shot images to an external device in real time. For example, the camera application may include an application (for example, a QR code scanner, a bar code scanner, a product search application, or an optical text recognition application) that analyzes a captured image and provides information to a user. For example, the camera application may include an application that controls operations of an electronic device through image analysis (for example, an application that determines illumination information and controls brightness of a display). The above-described example is just for explaining examples of specific embodiments, and is not limited thereto.

According to an embodiment, the memory 230 may store at least one of instructions for controlling at least one of the components included in the electronic device 201, or an API. The memory 230 may store one or more camera applications. The camera application may include a native camera application and a third-party camera application. The native camera application may be loaded into the electronic device 201 when the electronic device 201 is released. The third-party camera application may be an application that is installed in the electronic device 201 after the electronic device 201 is released.

According to an embodiment, the camera module 280 may acquire image data, based on a control signal that is acquired by the processor 220 executing a camera application. For example, the camera module 280 may acquire image data in response to a control signal for the camera application to request an image stream from a camera. The control signal may contain stream information related to the image stream. The image stream may refer to a string of image data that is acquired in the camera of the electronic device to be transmitted to the camera application. The stream information may be information related to attributes of the image stream, and may contain information of at least one of the type, standard, size, data space, stream usage, metadata or a stream combination of the stream. The above-described example is just for explaining examples of specific embodiments and is not limited thereto. For example, the camera module 280 may generate an image stream based on a camera application and stream information. The camera module 280 may establish at least one of a preview image stream, a still image stream or a moving image stream. For example, the camera module 280 may acquire image data corresponding to stream information. For example, the camera module 280 may acquire preview image data, still image data, and moving image data corresponding to stream information. The camera module 280 may provide image data to the camera application through streams. For example, the camera module 280 may provide an image stream established based on stream information to the camera application.

According to an embodiment, the display 260 may display a user interface (UI) of the camera application. The display 260 may display image data (for example, still image data, moving image data, preview image data) provided from the camera module 280.

According to an embodiment, the communication circuit 290 may exchange data with an external device (for example, the electronic device 102, 104 and/or the server 108 of FIG. 1) of the electronic device 201. For example, the communication circuit 290 may receive a control signal for controlling the electronic device 201 from another electronic device such as a server (for example, the server 108 of FIG. 1, a mobile terminal (for example, the electronic device 102, 104 of FIG. 1)). The communication circuit 290 may transmit image data acquired through the camera module 280 to an external electronic device.

According to an embodiment, the processor 220 may acquire image data by using a camera function specialized for a native camera application, by executing the native camera application. For example, the processor 220 may use a camera function specialized for the native camera application (for example, a multi-frame synthesis function for noise removal, a multi-frame synthesis function for high dynamic range (HDR), a video ultra low light (VIULL) function, or an electrical image stabilization (EIS) function, etc.), based on stream information of an image stream requested by the native camera application. For example, the processor 220 may apply the camera function specialized for the native camera application to the image data, based on a shooting setting value of metadata contained in the stream information.

According to an embodiment, the processor 220 may acquire image data by executing a third-party camera application. For example, the processor 220 may acquire a preview image stream, a still image stream, a moving image stream corresponding to stream information of an image stream requested by the third-party camera application.

According to an embodiment, the processor 220 may determine whether to acquire the image stream requested by the third-party camera application by using the camera function specialized for the native camera application. For example, the processor 220 may determine whether to acquire a first image stream by using the camera function specialized for the native camera application, based on first stream information of the first image stream requested by the third-party camera application. For example, the processor 220 may identify whether values of the type, standard, size, data space, stream usage of the stream included in the first stream information match pre-defined values for using the camera function specialized for the native camera application. For example, the processor 220 may determine whether a first shooting setting value of first metadata related to the first image stream matches a pre-defined second shooting setting value for using the camera function specialized for the native camera application. For example, the processor 220 may determine whether a first stream combination included in the first stream information matches a second stream combination for using the camera function specialized for the native camera application.

According to an embodiment, the processor 220 may provide a control signal for the operation of the camera module 280 to the camera module 280, based on a result of identifying whether to acquire the image stream requested by the third-party camera application by using the camera function specialized for the native camera application. For example, the processor 220 may provide a control signal containing a first camera identifier to the camera module 280, based on determining that the image stream requested by the third-party camera application is not acquired by using the camera function specialized for the native camera application. The first camera identifier may be referred to as a general-purpose ID of the camera. The general-purpose ID of the camera may be a camera ID that is universally used by the third-party camera application to operate the camera of the electronic device. The general-purpose ID of the camera may be acquired through a Google^{TM} standard camera API. For example, the processor 220 may provide a control signal containing a second camera identifier to the camera module 280, based on determining that the image stream requested by the third-party camera application is acquired by using the camera function specialized for the native camera application. The second camera identifier may be referred to as a hidden ID of the camera. The hidden ID of the camera may be an ID of the camera that is already determined to be used for the electronic device to provide the specialized function in the native camera application.

According to an embodiment, the processor 220 may acquire an image stream by using the camera function specialized for the native camera application, based on a result of identifying whether to acquire the image stream requested by the third-party camera application by using the camera function specialized for the native camera application. The processor 220 may use the camera function specialized for the native camera application based on the hidden ID of the camera. The processor 220 may generate the image stream by applying the camera function specialized for the native camera application to image data acquired by the camera module 280. For example, the processor 220 may generate a moving image stream with minimal shaking by applying the EIS function to image data acquired by the camera module 280.

According to an embodiment, the processor 220 may set metadata related to the image stream requested by the third-party camera application. The metadata may be information that contains at least one of a shooting setting value or a shooting result value of the camera for the image stream. For example, the metadata may contain a shooting setting value or a shooting result value related to at least one of an exposure time, a frame duration, sensitivity, a color space, or a lens contrast function. For example, the metadata may have a shooting setting value pre-defined for generating an image stream using the camera function specialized for the native camera application. For example, the metadata may have vendor key metadata pre-defined for generating an image stream using the camera function specialized for the native camera application. The vendor key metadata may be metadata of an image stream that is pre-set by the manufacturer of the electronic device through the native camera API. The vendor key metadata may contain a pre-defined shooting setting value for generating an image stream by using the camera function specialized for the native camera application. For example, the processor 220 may set a shooting setting value for acquiring the image stream requested by the third-party camera application. The processor 220 may set a shooting setting value corresponding to each of the image streams requested by the third-party camera application. The processor 220 may set metadata of the image stream as the pre-defined shooting setting value for generating the image stream by using the camera function specialized for the native camera application.

According to an embodiment, the processor 220 may determine whether a condition for generating the image stream using the camera function specialized for the native camera application is satisfied, based on the metadata related to the image stream requested by the third-party camera application. For example, the processor 220 may determine whether the first shooting setting value of the first metadata related to the first image stream requested by the third-party camera application matches the pre-defined second shooting setting value for generating the image stream using the camera function specialized for the native camera application. For example, the processor 220 may determine whether the condition for generating the image stream using the camera function specialized for the native camera application is satisfied, by identifying whether the first metadata contains vendor key metadata.

According to an embodiment, the processor 220 may change (for example, edit, change, convert) the metadata related to the image stream requested by the third-party camera application. For example, the processor 220 may edit the first shooting setting value to the second shooting setting value, based on a result of determining that the first shooting setting value is different from the second shooting setting value. The first shooting setting value and the second shooting setting value may be the same value that is expressed based on different criteria. For example, the processor 220 may change the shooting setting value of the metadata corresponding to each of the image streams requested by the third-party camera application. The processor 220 may change the first metadata to the second metadata containing vendor key metadata in response to identifying that the first metadata does not contain vendor key metadata.

According to an embodiment, the processor 220 may change the shooting result value of the metadata related to the image stream provided to the third-party camera application. For example, the processor 220 may change a first shooting result value to a second shooting result value, such that the first shooting result value of the first metadata of the first image stream acquired based on the first shooting setting value matches the second shooting setting value requested by the third-party camera application. The first shooting result value and the second shooting result value may be the same value that is expressed based on different criteria.

According to an embodiment, the processor 220 may determine whether the condition for generating the image stream using the camera function specialized for the native camera application is satisfied, based on information on a stream combination related to the image stream requested by the third-party camera application. The stream combination may be a set of one or more streams configured in the electronic device. For example, the processor 220 may determine whether the first stream combination contained in the first stream information matches the second stream combination in which the specialized function is applied to the image stream.

According to an embodiment, the processor 220 may change (for example, edit, change, convert) the stream combination related to the image stream requested by the third-party camera application. The processor 220 may change the first stream combination to the second stream combination, based on determining that the first stream combination does not match the second stream combination for generating the image stream using the camera function specialized for the native camera application.

According to an embodiment, the processor 220 may acquire an image stream matching the first stream combination by using an image stream acquired based on the second stream combination, and may provide the image stream to the third-party camera application. The second stream combination may be a stream combination for generating an image stream by using the camera function specialized for the native camera application. The first stream combination may be a stream combination of the image stream requested from the third-party camera application. For example, the processor 220 may acquire a second image stream corresponding to the first stream combination by scaling up the first image stream acquired based on the second stream combination. The processor 220 may provide the second image stream to the third-party camera application.

According to disclosed embodiments, the electronic device 201 may generate an image stream by using the camera function specialized for the native camera application, without editing the third-party camera application.

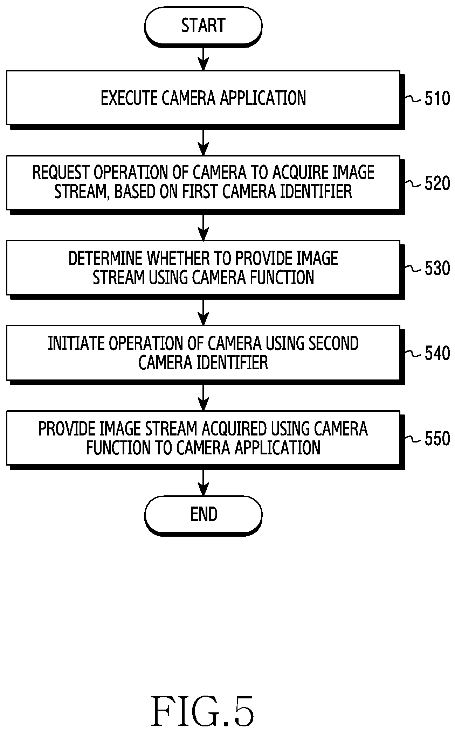

FIG. 3 is a block diagram to explain modules included in an electronic device according to an embodiment. Each of the modules shown in FIG. 3 may be implemented by hardware, software or firmware. The modules illustrated in FIG. 3 may be implemented by software by a processor of the electronic device (for example, the processor 220 of FIG. 2) executing instructions. The electronic device may perform processes illustrated in flowcharts of FIGS. 5, 6, 7, 9, and 11 using the modules illustrated in FIG. 3.

Referring to FIG. 3, the electronic device may control the operation of a camera by using a framework 310, a hardware abstraction layer (HAL) 330. The framework 310 may refer to a tool that is established according to rules in order for the electronic device to use the camera. The framework 310 may include APIs needed for operating the camera. The HAL 330 may be a layer that is abstracted between physical hardware of the electronic device and software executed in the electronic device, and may perform a role of controlling the camera of the electronic device. The HAL 330 may control the camera by providing a control signal to a camera driver.

Referring to FIG. 3, the electronic device may provide a control signal for controlling the camera through an API included in the framework 310 to the HAL 330, by executing a camera application 301, 302. At least one of the camera application 301, 302 or the framework 310 may be that stored in a memory of the electronic device. At least one of the camera application 301, 302 or the framework 310 may be that stored in a repository (for example, a cloud) located outside the electronic device. The electronic device may control a camera module (for example, the camera module 280 of FIG. 2) by using the HAL 330 to acquire image data through an image sensor of the camera module (for example, the camera module 280 of FIG. 2).

Referring to FIG. 3, the electronic device may execute a camera application. For example, the electronic device may execute at least one of a first camera application 301 and a second camera application 302. The electronic device may use an API corresponding to the camera application 301, 302 among the APIs included in the framework 310, in response to the camera application 301, 302 being executed.

For example, when the first camera application 301 is executed, the electronic device may control the camera module by using a first API 311. For example, the first camera application 301 may include an application that is installed in the electronic device at the time of manufacturing the electronic device and provides a function using the camera. The first camera application 301 may be referred to as a native camera application. The first API 311 may include an API that is installed in the electronic device at the time of manufacturing the electronic device to execute a function provided by using the camera. The first API 311 may be referred to as a native camera application programming interface (API). The first API 311 may be configured to request the operation of the camera and provision of an image stream through a first HAL 331. The first HAL may be referred to as a native camera HAL.

For example, when the second camera application 302 is executed, the electronic device may control the camera by using a second camera API 312. The second camera application 302 may include, for example, an application (for example, an application provided by a third party) installed after the electronic device is manufactured. The second API 312 may include an API (for example, a Google^{TM} standard camera API) provided in an operating system installed in the electronic device. If there is no virtual layer 320, the second API 312 may be configured to request the operation of the camera and provision of an image stream through a second HAL 332. The second HAL may include a hardware abstraction layer which is provided by a chipset vendor of the electronic device.

According to an embodiment, the electronic device may provide a control signal outputted from the framework 310 to the HAL 330 via the virtual layer 320. The virtual layer 320 may be a layer that provides a control signal and/or data provided to the virtual layer 320 from the framework 310 or the HAL 330 to the HAL 330 or the framework 310. At least one of operations performed in the virtual layer 320 may be performed via the HAL 330.

According to an embodiment, the electronic device may identify stream information of an image stream requested from the camera by the camera application 301, 302 through the virtual layer 320. The stream information may include information of at least one of the type, standard, size, data space, stream usage, metadata or a stream combination of a stream. The above-described example is just for explaining examples of specific embodiments and is not limited thereto.

According to an embodiment, the electronic device may provide temporary camera information to the camera application 301, 302 in order to acquire stream information from the camera application 301, 302 through the virtual layer 320. The temporary camera information may be data that has a different value from actual information of the camera used in the electronic device, and may be configured in the same format as the camera information. For example, the electronic device may provide the temporary camera information to the camera application 301, 302 in response to a control signal containing an instruction to initiate the operation of the camera being acquired from the camera application 301, 302 through the virtual layer 320. The camera application 301, 302 may provide a control signal requesting an image stream to the camera in response to the temporary camera information being provided. The control signal may contain stream information of the image stream requested by the camera application 301, 302.

According to an embodiment, the electronic device may determine whether it is possible to generate an image stream using a camera function specialized for the native camera application using the stream information. For example, the electronic device may determine whether a condition for generating an image stream using the camera function specialized for the native camera application is satisfied, based on metadata contained in the stream information. The camera application 301, 302 may determine whether the specialized function of the native camera is applicable to the image stream requested from the camera. For example, the electronic device may determine whether the condition for generating the image stream using the camera function specialized for the native camera application is satisfied, based on information on a stream combination contained in the stream information.

According to an embodiment, the electronic device may execute a first camera function provided by the first HAL 330, based on determining that the image stream is provided using the camera function specialized for the native camera application. The first camera function may include a solution that is used in the first camera application 301. For example, the electronic device may provide a control signal that is generated by the first camera application 301 using the first API 311 to the first HAL 331. For example, the electronic device may provide a control signal that is generated by the second camera application 302 using the second camera API 312 to the first HAL 331.

According to an embodiment, the electronic device may provide a pre-defined camera identifier to the first HAL 331, based on determining that the image stream is provided by using the camera function specialized for the native camera application. The pre-defined camera identifier may be referred to as a hidden ID.

According to an embodiment, the electronic device may initiate the operation of the camera and acquire image data based on the pre-defined camera identifier through the HAL 330. For example, the electronic device may initiate the operation of the camera of the electronic device, based on the hidden ID of the camera. The electronic device may acquire image data from the camera which initiates its operation based on the hidden ID. The electronic device may generate an image stream using image data by executing the first camera function provided by the first HAL 331. For example, the electronic device may generate at least one of a preview image stream, a still image stream, and a moving image stream, by executing at least one of a multi-frame synthesis function for noise removal, a multi-frame synthesis function for high dynamic range (HDR), a video ultra low light (VIULL) function or an electrical image stabilization (EIS) function provided by the first HAL 331.

According to an embodiment, the electronic device may provide a pre-defined camera identifier to the second HAL 332, based on determining that it is not possible to provide the image stream using the camera function specialized for the native camera application. The pre-defined camera identifier may be referred to as a general-purpose ID. For example, the electronic device may provide the general-purpose ID and a control signal that is generated by the second camera application 302 using the second API 312 to the second HAL 332. The electronic device may initiate the operation of the camera of the electronic device based on the general-purpose ID of the camera. The electronic device may acquire image data from the camera which initiates its operations based on the general-purpose ID. The electronic device may generate an image stream using the image data.

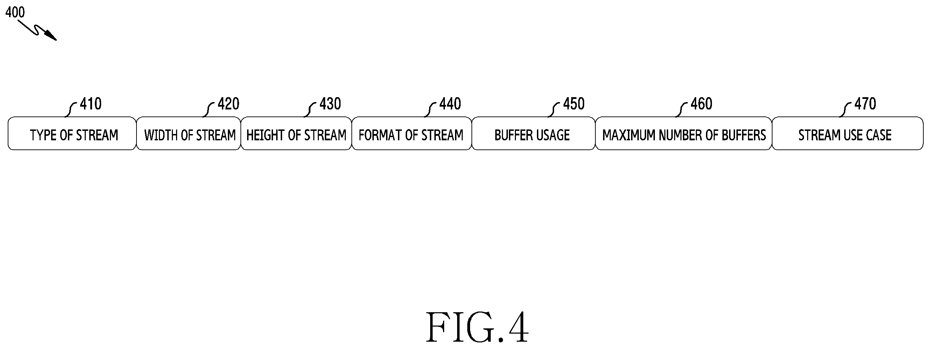

FIG. 4 is a view to explain a configuration of stream information related to image stream data that is requested by a camera application according to an embodiment.

The electronic device may execute a camera application, and the camera application may request an image stream from a camera. The camera application may provide stream information 400 related to the image stream to the camera.

Referring to FIG. 4, the stream information 400 requested by the camera application may include, as an element constituting the stream information 400, information of at least one of a type of the stream 410, a width of the stream 420, a height of the stream 430, a format of the stream 440, a buffer usage 450, the maximum number of buffers 460, a stream use case 470, metadata or a combination of streams. The above-described example is just for explaining examples of specific embodiments and is not limited thereto.

According to an embodiment, the stream information 400 may have specification pre-defined. For example, the types and arrangement order of elements constituting the stream information 400, information contained in the elements, a position of the stream information 400 on a control signal may be pre-defined. The above-described example is just for explaining examples of specific embodiments and is not limited thereto.

According to an embodiment, the type of the stream 400 may contain information related to a type of an image stream that is requested from the camera of the electronic device by the camera application. For example, the type of the stream 410 may contain information related to a type of the image stream like input, output, both directions. The above-described example is just for explaining examples of specific embodiments and is not limited thereto.

According to an embodiment, the width 420 and the height 430 of the stream may contain information related to a size of the image stream that is requested from the camera of the electronic device by the camera application. For example, the width 420 and the height 430 of the stream may contain information related to horizontal pixels and vertical pixels of the image stream. The above-described example is just for explaining examples of specific embodiments and is not limited thereto.

According to an embodiment, the format of the stream 440 may contain information related to a data format of the image stream that is requested from the camera of the electronic device by the camera application. For example, the format of the stream 440 may contain information related to a format that is applicable to a preview image, a still image, a moving image such as YUV, JPEG, RAW, etc. The above-described example is just for explaining examples of specific embodiments and is not limited thereto.

According to an embodiment, the buffer usage 450 may contain information related to a usage of a buffer related to the image stream. For example, the buffer usage 450 may contain information related to a usage of each buffer containing data of the image stream. The above-described example is just for explaining examples of specific embodiments and is not limited thereto.

According to an embodiment, the maximum number of buffers 460 may contain information related to the number of buffers related to the image stream. For example, the maximum number of buffers 460 may contain information defining the maximum number of buffers that contain data of the image stream. The above-described example is just for explaining examples of specific embodiments and is not limited thereto.

According to an embodiment, the stream use case 470 may contain information related to a use case of the image stream. For example, the stream use case 470 may contain information related to a use case of an image stream such as a preview image, a still image, a moving image. The above-described example is just for explaining examples of specific embodiments, and is not limited thereto.

According to an embodiment, the electronic device may identify the stream information 400, and may determine whether a specialized function is applicable to the image stream from the stream information 400. For example, the electronic device may identify the stream information 400 based on a position of the pre-defined stream information 400 on a control signal. For example, the electronic device may identify information contained in each of elements constituting the stream information 400 based on the type and arrangement order of the elements constituting the pre-defined stream information. The electronic device may determine whether each of the elements constituting the stream information 400 matches a condition for applying the specialized function to the image stream.

FIG. 5 is a flowchart illustrating a process in which an electronic device provides an image stream acquired using a camera function to a camera application according to an embodiment. Operations of the electronic device illustrated in FIG. 5 may be performed by a processor (for example, the processor 220 of FIG. 2) performing computation or controlling components of the electronic device. The camera function of FIG. 5 may correspond to a camera function provided by a first HAL (for example, the first HAL 331 of FIG. 3) described above with reference to FIG. 3.

Referring to FIG. 5, the electronic device may initiate the operation of the camera by executing a camera application, and may acquire an image stream acquired by using the camera function and may provide the image stream to the camera application.

According to an embodiment, in operation 510, the electronic device may execute the camera application. For example, the electronic device may execute the camera application in response to a user input. The camera application may be a native camera application or a third-party camera application. The camera application may be stored in a memory of the camera. The camera application may be stored in an external device of the camera (for example, a cloud).

According to an embodiment, in operation 520, the electronic device may perform an operation of requesting the operation of the camera to acquire an image stream in the camera application, based on a first camera identifier. For example, the electronic device may acquire a control signal containing a request for acquiring an image stream from the camera, based on a general-purpose ID of the camera generated from a Goggle standard camera API, through a third-party camera application. For example, the control signal may contain stream information of the image stream requested from the camera by the camera application. The stream information contained in the control signal may be stream information described above with reference to FIG. 4.

According to an embodiment, in operation 530, the electronic device may determine whether to provide the image stream using the camera function. The electronic device may identify the stream information of the image stream and may determine whether a specialized function is applicable to the image stream, based on the identified stream information. For example, the electronic device may identify first stream information of a first image stream from the control signal acquired through the Google^{TM} standard camera API by executing the third-party camera application. The electronic device may determine whether to generate the image stream using the camera function based on the first stream information.

According to an embodiment, the electronic device may identify the stream information from the control signal. For example, the electronic device may identify the stream information from the control signal based on a position of pre-defined stream information on the control signal. For example, the electronic device may identify information contained in each of the elements constituting the stream information based on the type and arrangement order of the elements constituting the pre-defined stream information.

According to an embodiment, the electronic device may determine whether to provide the image stream using the camera function, based on the stream information. For example, the electronic device may determine whether information contained in each of the elements constituting the stream information corresponds to a pre-defined setting value for using the camera function.

According to an embodiment, in operation 540, the electronic device may initiate the operation of the camera by using a second camera identifier, based on determining that the electronic device provides the image stream using the camera function. For example, the electronic device may provide the control signal acquired through the Google standard camera API and a hidden ID of the camera to a HAL in response to determining that the image stream is generated using the camera function. For example, the electronic device may provide the hidden ID of the camera and a control signal containing a CameraOpen instruction to initiate the operation of the camera to the HAL, thereby initiating the operation of the camera through the HAL. The camera which initiates its operation may acquire image data through an image sensor of a camera module.

According to an embodiment, in operation 550, the electronic device may provide the image stream acquired using the camera function to the camera application. The electronic device may control the camera module to generate an image stream based on the stream information contained in the control signal. For example, the electronic device may generate the image stream according to the type of the stream, the width of the stream, the height of the stream, and the format of the stream contained in the stream information. For example, the electronic device may generate the image stream using image data by executing the camera function based on the hidden ID. For example, the electronic device may generate at least one of a preview image stream, a still image stream, and a moving image stream by executing at least one of a multi-frame synthesis function for noise removal, a multi-frame synthesis function for high dynamic range (HDR), a video ultra low light (VIULL) function or an electrical image stabilization (EIS) function, which is provided by a first HAL (331 of FIG. 3). The electronic device may provide the generated image stream to the camera application.

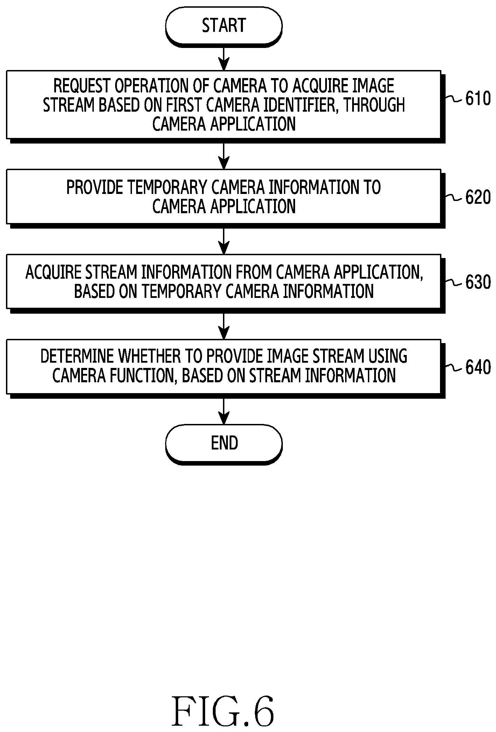

FIG. 6 is a flowchart illustrating a process in which an electronic device determines whether to provide an image stream using a camera function according to an embodiment. FIG. 6 may illustrate a process related to operations 520 and 530 of FIG. 5. The operations of the electronic device illustrated in FIG. 6 may be performed by a processor (for example, the processor 220 of FIG. 2) performing computation or controlling components of the electronic device.

According to an embodiment, in operation 610, the electronic device may perform an operation of requesting the operation of the camera to acquire an image stream based on a first camera identifier through a camera application. For example, the electronic device may generate a control signal containing a request for acquiring an image stream from the camera, based on a general-purpose ID of the camera generated from a Google standard camera API, through a third-party camera application.

According to an embodiment, in operation 620, the electronic device may provide temporary camera information to the camera application. For example, the electronic device may provide temporary camera information generated using a random number generation algorithm to the third-party camera application.

According to an embodiment, in operation 630, the electronic device may acquire stream information from the camera application based on the temporary camera information. The camera application may request an image stream from the camera in response to the camera information being provided. The electronic device may acquire a control signal containing a request for the image stream from the camera application. For example, the electronic device may identify first stream information of a first image stream from a control signal acquired through a Google^{TM} standard camera API, by executing the third-party camera application. The electronic device may identify stream information from the control signal. For example, the electronic device may identify stream information from the control signal based on a position of pre-defined stream information on the control signal.

According to an embodiment, in operation 640, the electronic device may determine whether to provide the image stream using the camera function, based on the stream information. For example, the electronic device may determine whether information contained in each of elements constituting the stream information corresponds to a pre-defined setting value for using a camera function specialized for a native camera application.

According to an embodiment, the electronic device may identify information contained in each of the elements constituting the stream information from the stream information. For example, the electronic device may identify information contained in each of the elements constituting the stream information, based on the type and arrangement order of the elements constituting pre-defined stream information. The elements constituting the stream information may include at least one of the type of the stream, the width of the stream, the height of the stream, the format of the stream, the buffer usage, the maximum number of buffers, the stream use case, metadata or a stream combination.

According to an embodiment, the electronic device may determine whether the information contained in each of the elements constituting the stream information corresponds to the pre-defined setting value for using the camera function specialized for the native camera application. For example, the electronic device may determine whether the width and height of the stream contained in the stream information match pre-defined width and height. For example, the electronic device may determine whether the format of the stream contained in the stream information is a pre-defined format. For example, the electronic device may determine whether the maximum number of buffers of the stream is less than or equal to a pre-defined number of buffers.

According to an embodiment, the electronic device may determine whether a shooting setting value contained in metadata corresponds to a pre-defined shooting setting value for using the camera function specialized for the native camera application. For example, the electronic device may determine whether the specialized function is applicable to the image stream, by determining whether the specialized function is applicable to the image stream by determining whether the shooting setting value contained in the metadata, such as an exposure time, a frame duration, sensitivity, a color space, corresponds to the pre-defined shooting setting value.

According to an embodiment, the electronic device may determine whether the stream combination corresponds to a pre-defined stream combination for using the camera function specialized for the native camera application. For example, the electronic device may determine whether the stream combination of the image stream requested by the third-party camera application corresponds to a stream combination that is configured by one preview image stream, one still image stream or one moving image stream and a combination thereof.

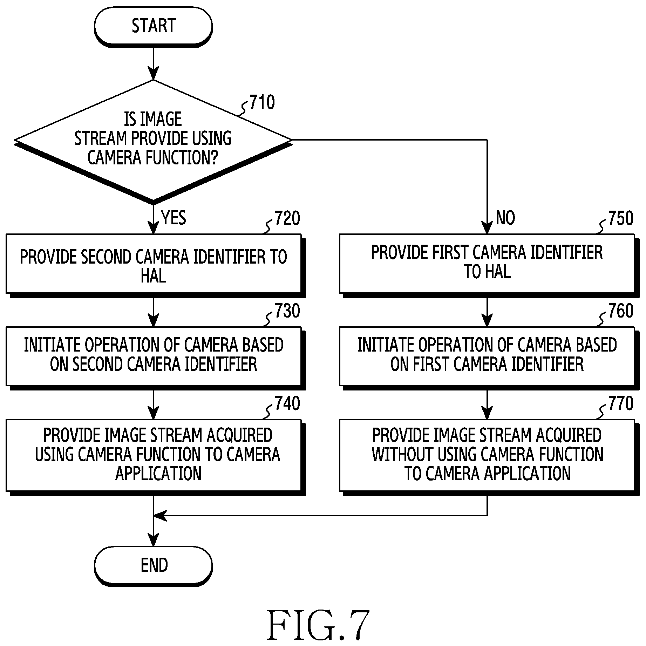

FIG. 7 is a flowchart illustrating a process in which an electronic device initiates the operation of a camera in response to a result of determining whether a specialized function is applicable to the camera. FIG. 7 illustrates a process related to operations 530 to 550 of FIG. 5. The operations of the electronic device illustrated in FIG. 7 may be performed by a processor (for example, the processor 220 of FIG. 2) performing computation or controlling components of the electronic device (for example, the electronic device 201 of FIG. 2).

According to an embodiment, in operation 710, the electronic device may determine whether it is possible to provide an image stream using a camera function. For example, the electronic device may determine whether it is possible to generate an image stream requested through a third-party camera application using a camera function specialized for a native camera application. Operation 710 may be inferred and applied from the operations of the electronic device described above with reference to operation 530 of FIG. 5 and operation 640 of FIG. 6, and redundant descriptions are omitted.

According to an embodiment, in operation 720, the electronic device may provide a second camera identifier to a HAL based on determining that it is possible to provide the image stream using the camera function. For example, the electronic device may provide a hidden ID of the camera to the HAL. Operation 720 may be inferred and applied from the operations of the electronic device described above with reference to operation 540 of FIG. 5, and redundant descriptions are omitted.

According to an embodiment, in operation 730, the electronic device may initiate the operation of the camera based on the second camera identifier. For example, the electronic device may initiate the operation of the camera based on the hidden ID of the camera and a control signal containing an instruction to initiate the operation of the camera. Operation 730 may be inferred and applied from the operations of the electronic device described above with reference to operation 540 of FIG. 5, and redundant descriptions are omitted.

According to an embodiment, in operation 740, the electronic device may provide the image stream acquired using the camera function to the camera application. For example, the electronic device may generate the image stream according to the type of the stream, the width of the stream, the height of the stream, the format of the stream contained in the stream information. For example, the electronic device may generate the image stream using image data by executing the camera function based on the hidden ID. Operation 740 may be inferred and applied from the operations of the electronic device described above with reference to operation 550 of FIG. 5, and redundant descriptions are omitted.

According to an embodiment, in operation 750, the electronic device may provide a first camera identifier to the HAL, based on determining that it is not possible to provide the image stream using the camera function. For example, the electronic device may provide a general-purpose ID of the camera to the HAL. The general-purpose ID of the camera may be a general-purpose ID that is acquired by the electronic device in operation 610 of FIG. 6.

According to an embodiment, in operation 760, the electronic device may initiate the operation of the camera based on the first camera identifier. For example, the electronic device may initiate the operation of the camera based on the general-purpose ID of the camera and a control signal containing an instruction to initiate the operation of the camera.

The electronic device may initiate the operation of the camera based on the general-purpose ID of the camera and the control signal. The electronic device may initiate the operation of the camera through the HAL by providing a CameraOpen instruction to initiate the operation of the camera, which is included in the control signal, and the general-purpose ID of the camera. The electronic device may acquire image data through an image sensor of a camera module which initiates its operation.

According to an embodiment, in operation 770, the electronic device may provide the image stream that is acquired without using the camera function to the camera application. The electronic device may control the camera to generate the image stream based on stream information contained in the control signal. For example, the electronic device may generate the image stream according to the type of the stream, the width of the stream, the height of the stream, the format of the stream contained in the stream information. The electronic device may provide the image stream to the camera application through the stream.

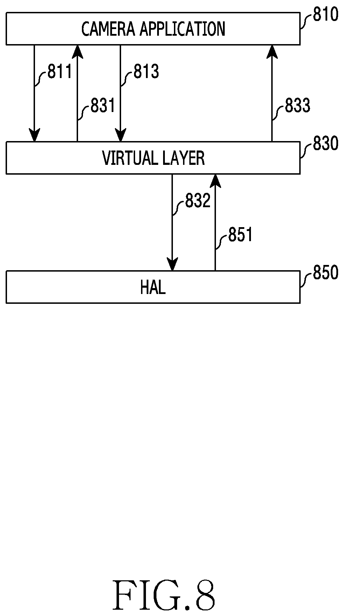

FIG. 8 is a view to explain a flow of data between modules included in an electronic device according to an embodiment. The electronic device may perform the processes illustrated in FIGS. 5 to 7 using the modules illustrated in FIG. 8. Each of the modules illustrated in FIG. 8 may be implemented by hardware, software, or firmware. The modules illustrated in FIG. 8 may be implemented by software by a processor (for example, the processor 220 of FIG. 2) of the electronic device executing an instruction. Each of the modules illustrated in FIG. 8 may correspond to each of the modules illustrated in FIG. 3. Each of the modules illustrated in FIG. 8 may perform operations of the corresponding module of FIG. 3.

Referring to FIG. 8, the electronic device may control an operation of a camera module by executing a camera application 810. For example, the electronic device may generate a control signal for controlling the operation of a camera through a Google^{TM} standard camera API by executing the camera application 810. The electronic device may control the operation of the camera by transmitting a control signal to a HAL 850. The electronic device may provide data to the camera application 810 and the HAL 850 by using a virtual layer 830.

According to an embodiment, the camera application 810 may provide data 811 containing a control signal for initiating the operation of the camera and a general-purpose ID of the camera to the virtual layer 830. For example, the camera application 810 may provide the data 811 containing a control signal containing a CameraOpen instruction and the general-purpose ID of the camera to the virtual layer 830 through a Google general-purpose camera API.

According to an embodiment, the virtual layer 830 may provide data 831 containing temporary camera information to the camera application 810. For example, the virtual layer 830 may deliver the data 831 containing temporary camera information generated through a random number generation algorithm to the camera application 810.

According to an embodiment, the camera application 810 may provide data 813 containing a control signal for requesting a first image stream to the virtual layer 830 in response to the data 831 being received from the virtual layer 830. The data 813 containing the control signal may contain first stream information of the first image stream.

According to an embodiment, the virtual layer 830 may identify the first stream information from the data 813 containing the control signal. For example, the virtual layer 830 may identify the first stream information from the data 813 based on a position of pre-defined stream information on the control signal.

According to an embodiment, the virtual layer 830 may identify information included in each of the elements constituting the first stream information. For example, the virtual layer 830 may identify information included in each of the elements constituting the first stream information, based on the type and arrangement order of the elements constituting pre-defined stream information. The elements constituting the first stream information may include at least one of the type of the stream, the width of the stream, the height of the stream, the format of the stream, a buffer usage, the maximum number of buffers, a stream use case, metadata or a stream combination.

According to an embodiment, the virtual layer 830 may determine whether to provide an image stream using the camera function, based on the stream information. For example, the virtual layer 830 may determine whether information included in each of the elements constituting the first stream information matches the condition for providing the image stream using the camera function. For example, the virtual layer 830 may determine whether the width and height of the stream match pre-defined width and height. For example, the virtual layer 830 may determine whether the format of the stream is a pre-defined format. For example, the virtual layer 830 may determine whether the maximum number of buffers of the stream is less than or equal to a pre-defined number of buffers. For example, the virtual layer 830 may determine whether a shooting setting value included in metadata of the first image stream corresponds to a pre-defined shooting setting value. For example, the virtual layer 830 may determine whether the stream combination of the first image stream corresponds to a pre-defined stream combination.

According to an embodiment, the virtual layer 830 may provide data 832 containing a camera identifier and a control signal for initiating the operation of a camera module to the HAL 850. For example, the virtual layer 830 may provide the data 832 containing a hidden ID of the camera and a control signal for initiating the operation of the camera module to the HAL 850, in response to a result of determining that it is possible to provide the image stream using the camera function. For example, the virtual layer 830 may provide the data 832 containing a general-purpose ID of the camera and a control signal for initiating the operation of the camera module to the HAL 850, in response to a result of determining that it is not possible to provide the image stream using the camera function.

According to an embodiment, the HAL 850 may initiate the operation of the camera module based on the camera identifier and the control signal for initiating the operation of the camera module, which are provided from the virtual layer 830. The HAL 850 may control the camera by providing a control signal to a camera driver.

According to an embodiment, the HAL 850 may acquire image data through an image sensor of the camera module which initiates its operation. The HAL 850 may generate the first image stream based on the first stream information contained in the data 832. For example, the HAL 850 may generate the first image stream according to the type, standard, size of the stream contained in the first stream information. For example, the HAL 850 may generate the first image stream by executing a first camera function based on the hidden ID of the camera.

According to an embodiment, the HAL 850 may provide the first image stream 851 to the virtual layer 830. For example, the HAL 850 may transmit the first image stream 851 which is acquired by executing the first camera function based on the hidden ID of the camera to the virtual layer 830. For example, the HAL 850 may transmit the first image stream 851 which is generated without using the camera function based on the general-purpose ID of the camera to the virtual layer 830.

According to an embodiment, the virtual layer 830 may provide the image stream 833 to the camera application 810. For example, the virtual layer 830 may provide the image stream 833 such that the first image stream 851 provided from the HAL 850 passes through the virtual layer 830 and is provided to the camera application 810. For example, the virtual layer 830 may generate a second image stream 833 based on the first image stream 851 provided from the HAL 850, and may provide the second image stream 833 to the camera application 810.

According to the disclosed embodiments, the electronic device may acquire image data applying a specialized function supported by a native camera application even when the user uses a third-party camera application.

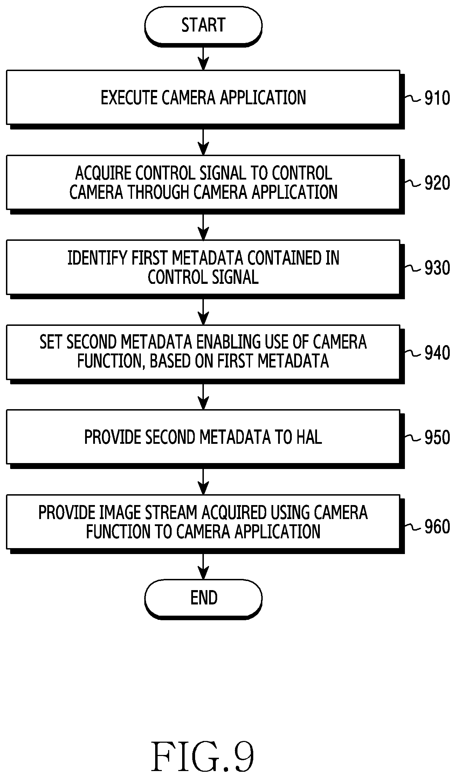

FIG. 9 is a flowchart illustrating a process in which an electronic device provides an image stream acquired using a camera function to a camera application by setting metadata according to an embodiment.

According to an embodiment, in operation 910, the electronic device may execute a camera application. For example, the electronic device may execute a third-party camera application in response to a user input. Operation 910 may be inferred and applied from the operations of the electronic device described above with reference to operation 510 of FIG. 5, and redundant descriptions are omitted.

According to an embodiment, in operation 920, the electronic device may acquire a control signal for controlling a camera of the electronic device through the camera application. For example, the electronic device may acquire a first control signal generated from a Google^{TM} standard camera API through the third-party camera application. Operation 920 may be inferred and applied from the operations of the electronic device described above with reference to operation 520 of FIG. 5, and redundant descriptions are omitted.

According to an embodiment, in operation 930, the electronic device may identify first metadata contained in the control signal. For example, the electronic device may identify first stream information contained in the first control signal and may identify first metadata contained in the first stream information. For example, the electronic device may identify the first metadata which is set according to the category of image streams (for example, a preview image stream, a still image frame, a moving image stream). For example, the electronic device may identify the first metadata which is set for each of the image streams. The first metadata may contain a shooting setting value that is used for acquiring the first image stream requested from the camera by the third-party camera application.

According to an embodiment, in operation 940, the electronic device may set second metadata for enabling use of the camera function based on the first metadata. For example, the electronic device may set the second metadata containing a shooting setting value related to at least one of pre-defined exposure time, frame duration, sensitivity, color space or lens contrast function for applying a specialized function. For example, the electronic device may set the second metadata according to the category of image streams (for example, a preview image stream, a still image stream, a moving image stream). For example, the electronic device may set the second metadata to correspond to each of the image streams requested by the third-party camera application, respectively.

According to an embodiment, the electronic device may determine whether a condition for acquiring an image stream using a camera function specialized for a native camera application is satisfied, based on the first metadata. For example, the electronic device may determine whether a first shooting setting value of the first metadata matches a pre-defined second shooting setting value for applying the specialized function. For example, the electronic device may determine whether the condition for applying the specialized function is satisfied, by identifying whether the first metadata contains vendor key metadata.

According to an embodiment, the electronic device may set the second metadata which enables application of the specialized function, based on determining that the condition for acquiring the image stream using the camera function specialized for the native camera application is not satisfied. For example, the electronic device may set the second metadata for the first image stream, by changing the first shooting setting value of the first metadata to the second shooting setting value, based on determining that the first shooting setting value (for example, an exposure time, a frame duration, sensitivity, a color space, etc.) of the first metadata does not match the pre-defined second shooting setting value for applying the specialized function. For example, the electronic device may change the first metadata into the second metadata containing the vendor key metadata, in response to identifying that the first metadata does not contain the vendor key metadata.

According to an embodiment, in operation 950, the electronic device may provide the second metadata to a HAL. For example, the electronic device may provide the HAL with a control signal containing the second metadata set according to the category of image streams (for example, a preview image, a still image stream, a moving image stream). For example, the electronic device may provide the HAL with the control signal containing the second metadata which is set to correspond to the requested image streams, respectively. For example, the electronic device may provide the HAL with the control signal containing the second metadata that results from change of the shooting setting value of at least one of the exposure time, frame duration, sensitivity or color space contained in the first metadata to correspond to a pre-defined shooting setting value. For example, the electronic device may provide the second metadata containing vendor key metadata to the HAL.

According to an embodiment, in operation 960, the electronic device may provide an image stream acquired using the camera function to the camera application. The electronic device may initiate the operation of the camera, based on a control signal containing the second metadata. The electronic device may acquire image data by using an image sensor of a camera module according to the shooting setting value contained in the second metadata. The electronic device may generate an image stream using the image data acquired based on the second metadata. The electronic device may generate the image stream using the camera function specialized for the native camera application. For example, the electronic device may generate the image stream using at least one feature of a multi-frame synthesis function for noise removal, a multi-frame synthesis function for high dynamic range (HDR), a video ultra low light (VIULL) function or an electrical image stabilization (EIS) function. The electronic device may provide the generated image stream to the third-party camera application.

According to an embodiment, the electronic device may change a shooting result value of the metadata related to the image stream to which the specialized function is applied. For example, the electronic device may change the shooting result value related to at least one of the exposure time, frame duration, sensitivity, color space or lens contrast function. For example, the electronic device may identify a first shooting result value from the metadata of the first image stream acquired based on the second shooting setting value. For example, the electronic device may change the first shooting result value to a second shooting result value, such that the first shooting result value matches the first shooting setting value contained in the control signal provided from the third-party camera application. The first shooting result value and the second shooting result value may be the same value expressed through different criteria. The electronic device may provide the image stream with the shooting result value of the metadata being modified to the third-party camera application.

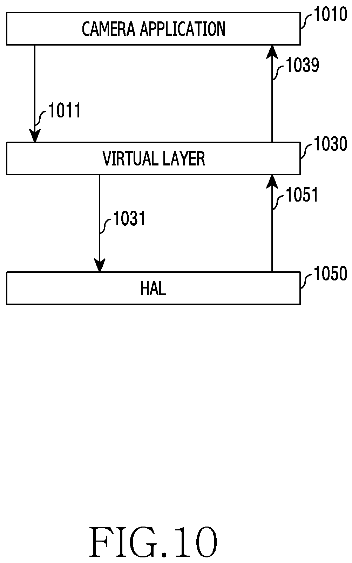

FIG. 10 is a view to explain a flow of data between modules included in an electronic device according to an embodiment. The electronic device may perform the process illustrated in FIG. 9 using the modules illustrated in FIG. 10. Each of the modules illustrated in FIG. 10 may be implemented by hardware, software, or firmware. The modules illustrated in FIG. 10 may be implemented by software by a processor (for example, the processor 220 of FIG. 2) of the electronic device executing an instruction. Each of the modules illustrated in FIG. 10 may correspond to each of the modules illustrated in FIG. 3. Each of the modules illustrated in FIG. 10 may perform operations of the modules of FIG. 3.

Referring to FIG. 10, the electronic device may control the operation of a camera by executing a camera application 1010. The electronic device may provide data to the camera application 1010 and a HAL 1050 by using a virtual layer 1030.

According to an embodiment, the camera application 1010 may provide data 1011 containing a first control signal requesting a first image stream from the camera to the virtual layer 1030. For example, the data 1011 may include a control signal for initiating the operation of the camera and a general-purpose ID of the camera. For example, the data 1011 may contain first metadata which is set through a Google^{TM} standard camera API. The first metadata may include a shooting setting value for acquiring the first image stream. For example, the camera application 1010 may transmit the data 1011 containing a first signal requesting a first preview image stream and a first still image stream to the virtual layer 1030. The data 1011 may include first metadata of the first preview image stream and first metadata of the first still image stream.

According to an embodiment, the virtual layer 1030 may identify the first metadata from the first control signal. For example, the virtual layer 1030 may identify the first metadata from the first control signal, based on a position of pre-defined stream information on the control signa and the type and arrangement order of elements constituting the pre-defined stream information. For example, the virtual layer 1030 may identify the first metadata of the first preview image stream and the first metadata of the first still image stream.

According to an embodiment, the virtual layer 1030 may determine whether to provide an image stream by using the camera function, based on the first metadata. For example, the electronic device may determine whether a first shooting setting value of the first metadata matches a pre-defined second shooting setting value for using the camera function. For example, the electronic device may determine whether the first shooting setting value on the exposure time, frame duration, sensitivity, color space from the first metadata corresponds to the pre-defined second shooting setting value. For example, the electronic device may determine whether a condition for using the camera function is satisfied, by determining whether the configuration of the first metadata corresponds to a configuration of pre-defined metadata for using the camera function. For example, the electronic device may determine whether the condition for applying the camera function is satisfied, by identifying whether the first metadata contains vendor key metadata for applying the camera function.

According to an embodiment, the virtual layer 1030 may set second metadata enabling generation of the first image stream using the camera function. For example, the virtual layer 1030 may set the second metadata to correspond to the image streams requested by the third-party camera application, respectively. For example, the virtual layer 1030 may set the second metadata to suit the category of the first image streams (for example, a preview image stream, a still image stream, a moving image stream). For example, the virtual layer 1030 may set the second metadata containing a shooting setting value related to at least one of a pre-defined exposure time, frame duration, sensitivity, color space or lens contrast function for using the camera function. For example, the virtual layer 1030 may set the second metadata enabling application of the camera function, based on determining that the camera function cannot be used. For example, the virtual layer 1030 may set the second metadata enabling application of the camera function to the first preview image stream and the first still image stream.

According to an embodiment, the virtual layer 1030 may provide a control signal 1031 containing the second metadata to the HAL 1050. For example, the virtual layer 1030 may provide the control signal 1031 containing the second metadata set to suit the category of the image streams (for example, a preview image stream, a still image stream, a moving image stream). For example, the virtual layer 1030 may provide the control signal containing the second metadata set to correspond to the requested image streams, respectively, to the HAL 1050. For example, the virtual layer 1030 may provide the HAL 1050 with the control signal containing the second metadata in which the shooting setting value of at least one of the exposure time, frame duration, sensitivity, or color space contained in the first metadata is changed to correspond to a pre-defined shooting setting value. For example, the virtual layer 1030 may provide the second metadata containing vendor key metadata to the HAL 1050. The vendor key metadata may be contained such that pre-defined shooting setting values for using the camera functions correspond to the camera functions, respectively. For example, the virtual layer 1030 may provide the control signal 1031 containing the second metadata of the first preview image stream and the second metadata of the first still image stream to the HAL 1050.

According to an embodiment, the HAL 1050 may initiate the operation of the camera based on the control signal 1031 containing the second metadata. The HAL 1050 may acquire image data by using an image sensor of a camera module according to the shooting setting value contained in the second metadata. The HAL 1050 may generate an image stream using the image data acquired based on the second metadata. The HAL 1050 may generate the image stream by using the camera function. For example, the HAL 1050 may generate the image stream by using at least one function of a multi-frame synthesis function for noise removal, a multi-frame synthesis function for high dynamic range (HDR), a video ultra low light (VIULL) function, or an electrical image stabilization (EIS) function. For example, the HAL 1050 may generate a first preview image stream to which video ultra low light (VIULL) is applied, and a first still image stream using the multi-frame synthesis function for high dynamic range (HDR).

According to an embodiment, the HAL 1050 may provide the image stream 1051 acquired by using the camera function to the virtual layer 1030. For example, the HAL 1050 may provide the virtual layer 1030 with the first preview image stream to which video ultra low light (VIULL) is applied, and the first still image stream to which the multi-frame synthesis function for high dynamic range (HDR) is applied.

According to an embodiment, the virtual layer 1030 may change a shooting result value of the metadata related to the image stream 1051. For example, the virtual layer 1030 may change the shooting result value related to at least one of the exposure time, frame duration, sensitivity, color space or lens contrast function. For example, the virtual layer 1030 may change a first shooting result value to a second shooting result value, such that the first shooting result value matches the first shooting setting value contained in the control signal provided from the third-party camera application. The first shooting result value and the second shooting result value may be the same value expressed through different criteria. For example, the virtual layer 1030 may change a value related to a shooting view angle of a still image stream shot by a wide-angle camera from -1 to 0.5.

According to an embodiment, the virtual layer 1030 may provide an image stream 1039 to the camera application. For example, the virtual layer 1030 may provide metadata containing the changed shooting result value to the third-party camera application along with the image stream 1039.

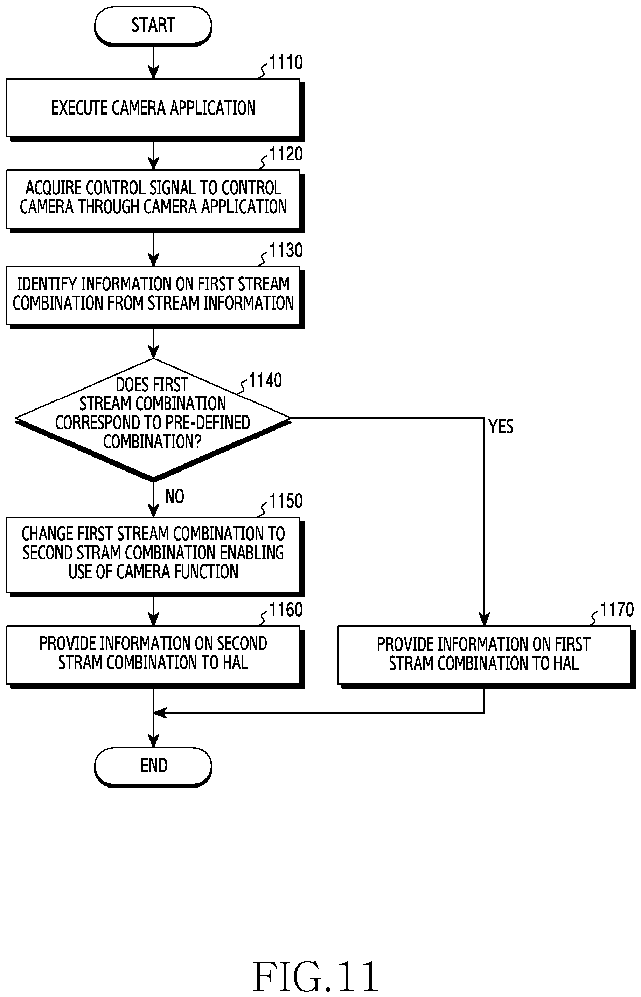

FIG. 11 is a flowchart illustrating a process in which an electronic device changes a stream combination and provides the stream combination to a HAL according to an embodiment. At least one of the processes illustrated in FIG. 11 may be performed by a processor of the electronic device.

According to an embodiment, in operation 1110, the electronic device may execute a camera application. For example, the electronic device may execute a third-party camera application in response to a user input. Operation 1110 may be inferred and applied from the operations of the electronic device described above with reference to operation 510 of FIG. 5, and redundant descriptions are omitted.

According to an embodiment, in operation 1120, the electronic device may acquire a control signal for controlling a camera of the electronic device through the camera application. For example, the electronic device may acquire a first control signal generated from a Google^{TM} standard camera API through the third-party camera application. Operation 1120 may be inferred and applied from the operations of the electronic device described above with reference to operation 520 of FIG. 5, and redundant descriptions are omitted.

According to an embodiment, in operation 1130, the electronic device may identify information on a first stream combination from stream information. For example, the electronic device may identify first stream information contained in the first control signal, and may identify information related to the first stream combination contained in the first stream information. The information related to the first stream combination may contain information on the category of a requested stream (for example, a preview stream, a still image stream, a moving image stream) and the number of streams. For example, the electronic device may identify information related to the first stream combination comprised of two preview streams and one still image stream from the first stream information.

According to an embodiment, in operation 1140, the electronic device may determine whether to provide an image stream by using a camera function, based on the first stream combination. The electronic device may determine whether to provide the image stream by using the camera function, by determining whether the first stream combination corresponds to a pre-defined stream combination for using the camera function. For example, the pre-defined stream combination for using the camera function may be a stream combination that is configured to include at least one of one preview stream, one still image stream, or one moving image stream. For example, the electronic device may determine whether a condition for generating the image stream using the camera function is not satisfied, by comparing the first stream combination comprised of two preview streams and one still image stream from the stream information, with the pre-defined stream combination for using the camera function.

According to an embodiment, in operation 1150, the electronic device may change the first stream combination to a second stream combination to use the camera function. The electronic device may change the first stream combination to the second stream combination, based on determining that the first stream combination does not correspond to the pre-defined stream combination for using the camera function. For example, the electronic device may change the first stream combination to the second stream combination comprised of one preview stream and one still image stream, by determining that the first stream combination comprised of two preview streams and one still image stream does not correspond to the pre-defined stream combination for using the camera function. The electronic device may acquire a control signal containing information on the second stream combination. For example, the electronic device may generate a second control signal by changing the first control signal containing the information related to the first stream combination to the second control signal containing information related to the second stream combination.

According to an embodiment, in operation 1160, the electronic device may provide the information related to the second stream combination to a HAL. For example, the electronic device may provide a control signal containing the information related to the second stream combination to the HAL. The electronic device may initiate the operation of the camera, based on the control signal containing the information related to the second stream combination. The electronic device may generate an image stream through the HAL, based on the information related to the second stream combination. For example, the electronic device may generate the image stream according to the second stream combination comprised of one preview stream and one still image stream. The electronic device may generate the image stream using the camera function. For example, the electronic device may acquire the image stream by acquiring at least one function of a multi-frame synthesis function for noise removal, a multi-frame synthesis function for high dynamic range (HDR), a video ultra low light (VIULL) function or an electrical image stabilization (EIS) function. The electronic device may provide the image stream generated by using the camera function based on the second stream combination to the third-party camera application.

According to an embodiment, the electronic device may acquire an image stream matching the first stream combination by using the image stream acquired based on the second stream combination. The electronic device may provide the image stream matching the first stream combination to the third-party camera application. For example, the first stream combination may be one preview stream and two still image streams. For example, the electronic device may generate the image stream matching the first stream combination from a first preview image stream and a first still image stream which are acquired according to the second stream combination. For example, the electronic device may acquire a second still image stream by performing image processing (for example, scale-up) with respect to the first still image stream. For example, the electronic device may provide the first preview image stream, the first still image stream, and the second still image stream to the third-party camera application.

According to an embodiment, in operation 1170, the electronic device may provide information related to the first stream combination to the HAL. The electronic device may provide a control signal containing the information on the first stream combination to the HAL, based on determining that the first stream combination corresponds to a pre-defined stream combination for generating an image stream using the camera function. The electronic device may initiate the operation of the camera, based on the control signal containing the information on the first stream combination. The electronic device may generate an image stream through the HAL, based on the information on the first stream combination. The electronic device may provide the image stream generated using the camera function based on the information on the first stream combination through the HAL to the third-party camera application.

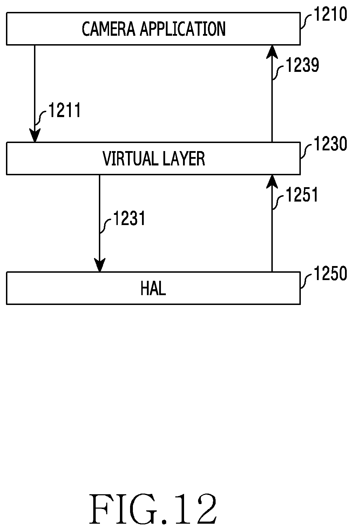

FIG. 12 is a view to explain a flow of data between modules included in an electronic device according to an embodiment. The electronic device may perform the process illustrated in FIG. 11 using the modules illustrated in FIG. 12. Each of the modules illustrated in FIG. 12 may be implemented by hardware, software, or firmware. The modules illustrated in FIG. 12 may be implemented by software by a processor (for example, the processor 220 of FIG. 2) of the electronic device executing an instruction. Each of the modules illustrated in FIG. 12 may correspond to each of the modules illustrated in FIG. 3. Each of the modules illustrated in FIG. 12 may perform operations of the modules of FIG. 3.

Referring to FIG. 12, the electronic device may control the operation of a camera by executing a camera application 1210. The electronic device may provide data to the camera application 1210 and a HAL 1250 by using a virtual layer 1230. Data 1211 may contain a control signal for initiating the operation of the camera and a general-purpose ID of the camera.

According to an embodiment, the camera application 1210 may provide the data 1211 containing a first control signal for requesting a first image stream from the camera to the virtual layer 1230. The data 1211 may contain first stream information of the first image stream. The first stream information may contain information on a first stream combination of the first image stream. The information on the first stream combination may include information on the category of a requested stream (for example, a preview stream, a still image stream, a moving mage stream) and the number of streams. For example, the information on the first stream combination may contain information on a stream combination comprised of two preview streams and one still image stream.

According to an embodiment, the virtual layer 1230 may identify information on the first stream combination contained in the first control signal. For example, the virtual layer 1230 may identify the first stream information contained in the first control signal and may identify information on the first stream combination contained in the first stream information.

According to an embodiment, the virtual layer 1230 may determine whether it is possible to generate the first image stream by using the camera function, based on the first stream combination. The virtual layer 1230 may determine whether a condition for using the camera function for the image stream is satisfied, by determining whether the first stream combination corresponds to a pre-defined stream combination for using the camera function. For example, the pre-defined stream combination for applying a specialized function may be a stream combination that is configured to include at least one of one preview stream, one still image stream, or one moving image stream. For example, the electronic device may determine that the condition for using the camera function for the image stream is not satisfied, by comparing the first stream combination comprised of two preview streams and one still image stream from the stream information with the pre-defined stream combination for using the camera function.

According to an embodiment, the virtual layer 1230 may provide a control signal 1231 containing the information on the first stream combination to the HAL 1250, based on determining that the first stream combination corresponds to the pre-defined stream combination for using the camera function. For example, the virtual layer 1230 may provide the control signal 1231 containing the information on the first stream combination to the HAL 1250, based on determining that the pre-defined stream combination so that the first stream combination comprised of one preview image stream and one still image stream applies the specialized function, corresponds to a stream combination configured to include at least one of one preview stream, one still image stream, or one moving image stream.

According to an embodiment, the HAL 1250 may initiate the operation of the camera, based on the control signal 1231 containing the first stream combination. For example, the HAL 1250 may generate an image stream corresponding to the first stream combination. For example, the HAL 1250 may establish one preview image stream and one still image stream according to the first stream combination that is comprised of one preview image stream and one still image stream. The HAL 1250 may provide the one preview image stream and the one still image stream to the third-party camera application.

According to an embodiment, the virtual layer 1230 may change the first stream combination to a second stream combination, based on determining that the first stream combination does not match the pre-defined stream combination for using the camera function. For example, the virtual layer 1230 may determine that the first stream combination comprised of two preview streams and one still image stream does not correspond to the pre-defined stream combination for using the camera function, and hence, may change the first stream combination to the second stream combination comprised of one preview stream and one still image stream. The virtual layer 1230 may provide the control signal 1231 containing the second stream combination changed from the first stream combination to the HAL 1250.

According to an embodiment, the HAL 1250 may initiate the operation of the camera, based on the control signal 1231 containing the second stream combination. For example, the HAL 1250 may generate an image stream corresponding to the second stream combination. For example, the HAL 1250 may establish one preview image stream and one still image stream according to the second stream combination comprised of one preview image stream and one still image stream. For example, the HAL 1250 may generate the image stream using the camera function. For example, the HAL 1250 may generate a first preview image stream to which video ultra low light (VIULL) is applied, and a first still image stream using the multi-frame synthesis function for high dynamic range (HDR).

According to an embodiment, the HAL 1250 may provide the image stream 1251 to which the specialized function is applied to the virtual layer 1230. For example, the HAL 1250 may provide the first preview image stream generated using video ultra low light (VIULL), and the first still image stream generated using the multi-frame synthesis function for high dynamic range (HDR).

According to an embodiment, the virtual layer 1230 may acquire an image stream matching the first stream combination by using the image stream 1251 acquired based on the second stream combination. The virtual layer 1230 may provide the image stream 1239 matching the first stream combination to the camera application 1210. For example, the first stream combination may be one preview stream and two still image frames. For example, the virtual layer 1230 may generate an image stream matching the first stream combination from the first preview image stream and the first still image stream which are acquired according to the second stream combination. For example, the virtual layer 1230 may acquire a second still image stream by scaling up the first still image stream. The virtual layer 1230 may provide the first preview image stream, the first still image stream, and the second still image stream to the camera application 1210.

According to an embodiment, an electronic device (for example, 101, 201) may include a camera (for example, 180, 280), at least one processor (for example, 120, 220), and a memory configured to store instructions, a first camera application (for example, 301) using a first application programming interface (API) (for example, 311) and a second camera application (for example, 302, 810, 1010, 1210) using a second API (for example, 312). When being executed by the at least one processor (for example, 120, 220), the instructions may cause the electronic device (for example, 101, 201) to request an operation of the camera (for example, 180, 280) to acquire a first image stream by the second camera application (for example, 302, 810, 1010, 1210), based on a first camera identifier. When being executed by the at least one processor, the instructions may cause the electronic device to determine whether to provide the first image stream using a camera function which is executed by invoking the first API (for example, 311), based on first stream information related to the first image stream. When being executed by the at least one processor, the instructions may cause the electronic device to initiate the operation of the camera using a second camera identifier, based on determining that the first image stream is provided using the camera function. When being executed by the at least one processor, the instructions may cause the electronic device to provide the first image stream acquired using the camera function to the second camera application (for example, 302, 810, 1010, 121).

According to an embodiment, when being executed by the at least one processor (for example, 120, 220), the instructions may cause the electronic device (for example, 101, 201) to provide temporary camera information to the second camera application, based on the first camera identifier. When being executed by the at least one processor (for example, 120, 220), the instructions may cause the electronic device (for example, 101, 201) to acquire the first stream information from the second camera application (for example, 302, 810, 1010, 121).

According to an embodiment, when being executed by the at least one processor (for example, 120, 220), the instructions may cause the electronic device (for example, 101, 201) to operate the camera using the first camera identifier, based on determining that the first image stream is not provided using the camera function. When being executed by the at least one processor (for example, 120, 220), the instructions may cause the electronic device (for example, 101, 201) to provide the first image stream acquired without using the camera function to the second camera application (for example, 302, 810, 1010, 1210).

According to an embodiment, when being executed by the at least one processor (for example, 120, 220), the instructions may cause the electronic device (for example, 101, 201) to set a pre-defined shooting setting value for using the camera function for metadata related to the first image stream, according to a category of the first image stream identified from the first stream information. When being executed by the at least one processor (for example, 120, 220), the instructions may cause the electronic device (for example, 101, 201) to acquire the first image stream using the pre-defined shooting setting value set for the metadata.

According to an embodiment, when being executed by the at least one processor (for example, 120, 220), the instructions may cause the electronic device (for example, 101, 201) to identify a first shooting setting value of first metadata related to the first image stream from the first stream information. When being executed by the at least one processor (for example, 120, 220), the instructions may cause the electronic device (for example, 101, 201) to determine whether the first shooting setting value corresponds to a pre-defined second shooting setting value for using the camera function. When being executed by the at least one processor (for example, 120, 220), the instructions may cause the electronic device (for example, 101, 201) to change the first shooting setting value to the second shooting setting value, based on determining that the first shooting setting value does not correspond to the second shooting setting value. When being executed by the at least one processor, the instructions may cause the electronic device to acquire the first image stream using the second shooting setting value.

According to an embodiment, when being executed by the at least one processor (for example, 120, 220), the instructions may cause the electronic device (for example, 101, 201) to identify a first shooting result value from second metadata of the first image stream which is acquired using the second shooting setting value. When being executed by the at least one processor (for example, 120, 220), the instructions may cause the electronic device (for example, 101, 201) to change the first shooting result value to a second shooting result value such that the first shooting result value matches the first shooting setting value. When being executed by the at least one processor (for example, 120, 220), the instructions may cause the electronic device (for example, 101, 201) to provide the second metadata of the first image stream containing the second shooting result value to the second camera application.

According to an embodiment, when being executed by the at least one processor (for example, 120, 220), the instructions may cause the electronic device (for example, 101, 201) to determine whether first metadata related to the first image stream contains pre-defined vendor key metadata for using the camera function. When being executed by the at least one processor (for example, 120, 220), the instructions may cause the electronic device (for example, 101, 201) to change the first metadata to contain the vendor key metadata, based on determining that the first metadata does not contain the vendor key metadata. When being executed by the at least one processor (for example, 120, 220), the instructions may cause the electronic device (for example, 101, 201) to acquire the first image stream using the vendor key metadata.

According to an embodiment, when being executed by the at least one processor (for example, 120, 220), the instructions may cause the electronic device (for example, 101, 201) to identify a first stream combination related to the first image stream from the first stream information. When being executed by the at least one processor (for example, 120, 220), the instructions may cause the electronic device (for example, 101, 201) to determine whether the first stream combination corresponds to a pre-defined second stream combination for using the camera function. When being executed by the at least one processor (for example, 120, 220), the instructions may cause the electronic device (for example, 101, 201) to change the first stream combination to the second stream combination, based on determining that the first stream combination does not correspond to the second stream combination. When being executed by the at least one processor (for example, 120, 220), the instructions may cause the electronic device (for example, 101, 201) to acquire the first image stream based on the second stream combination.

According to an embodiment, when being executed by the at least one processor (for example, 120, 220), the instructions may cause the electronic device (for example, 101, 201) to acquire a second image stream by performing pre-set image processing with respect to the first image stream acquired based on the second stream combination. When being executed by the at least one processor (for example, 120, 220), the instructions may cause the electronic device (for example, 101, 201) to provide the second image stream to the second camera application. When being executed by the at least one processor (for example, 120, 220), the instructions may cause the electronic device (for example, 101, 201) to acquire the second image stream to match the first stream combination.

According to an embodiment, there is provided an operating method of an electronic device (for example, 101, 201) including a memory in which a first camera application using a first API and a second camera application using a second API are stored, and a camera, the method may include requesting of an operation of the camera to acquire a first image stream by the second camera application, based on a first camera identifier. The operating method of the electronic device (for example, 101, 201) may further include determining whether to provide the first image stream using a camera function which is executed by invoking the first API, based on first stream information related to the first image stream. The operating method of the electronic device (for example, 101, 201) may further include initiating the operation of the camera using a second camera identifier, based on determining that the first image stream is provided using the camera function. The operating method of the electronic device (for example, 101, 201) may further include providing the first image stream acquired using the camera function to the second camera application.

According to an embodiment, the operating method of the electronic device (for example, 101, 201) may further include providing temporary camera information to the second camera application, based on the first camera identifier. The operating method of the electronic device (for example, 101, 201) may further include acquiring the first stream information from the second camera application.

According to an embodiment, the operating method of the electronic device (for example, 101, 201) may further include operating the camera using the first camera identifier, based on determining that the first image stream is not provided using the camera function. The operating method of the electronic device (for example, 101, 201) may further include providing the first image stream acquired without using the camera function to the second camera application.

According to an embodiment, the operating method of the electronic device (for example, 101, 201) may further include setting a pre-defined shooting setting value for using the camera function for metadata related to the first image stream, according to a category of the first image stream identified from the first stream information. The operating method of the electronic device (for example, 101, 201) may further include acquiring the first image stream using the pre-defined shooting setting value set for the metadata.

According to an embodiment, the operating method of the electronic device (for example, 101, 201) may further include identifying a first shooting setting value of first metadata related to the first image stream from the first stream information. The operating method of the electronic device (for example, 101, 201) may further include determining whether the first shooting setting value corresponds to a pre-defined second shooting setting value for using the camera function. The operating method of the electronic device (for example, 101, 201) may further include changing the first shooting setting value to the second shooting setting value, based on determining that the first shooting setting value does not correspond to the second shooting setting value. The operating method of the electronic device (for example, 101, 201) may further include acquiring the first image stream using the second shooting setting value.

According to an embodiment, the operating method of the electronic device (for example, 101, 201) may further include identifying a first shooting result value from second metadata of the first image stream which is acquired using the second shooting setting value. The operating method of the electronic device (for example, 101, 201) may further include changing the first shooting result value to a second shooting result value such that the first shooting result value matches the first shooting setting value. The operating method of the electronic device (for example, 101, 201) may further include providing the second metadata of the first image stream containing the second shooting result value to the second camera application.

According to an embodiment, the operating method of the electronic device (for example, 101, 201) may further include determining whether first metadata related to the first image stream contains pre-defined vendor key metadata for using the camera function. The operating method of the electronic device (for example, 101, 201) may further include changing the first metadata to contain the vendor key metadata, based on determining that the first metadata does not contain the vendor key metadata. The operating method of the electronic device (for example, 101, 201) may further include acquiring the first image stream using the vendor key metadata.

According to an embodiment, the operating method of the electronic device (for example, 101, 201) may further include identifying a first stream combination related to the first image stream from the first stream information. The operating method of the electronic device (for example, 101, 201) may further include determining whether the first stream combination corresponds to a pre-defined second stream combination for using the camera function. The operating method of the electronic device (for example, 101, 201) may further include changing the first stream combination to the second stream combination, based on determining that the first stream combination does not correspond to the second stream combination. The operating method of the electronic device (for example, 101, 201) may further include acquiring the first image stream based on the second stream combination.

According to an embodiment, the operating method of the electronic device (for example, 101, 201) may further include acquiring a second image stream by performing pre-set image processing with respect to the first image stream acquired based on the second stream combination. The operating method of the electronic device (for example, 101, 201) may further include providing the second image stream to the second camera application. The second image stream may be acquired to match the first stream combination.

According to an embodiment, there is provided a computer-readable non-transitory recording medium on which an instruction to control an electronic device (for example, 101, 201) is recorded, the electronic device including a memory in which a first camera application using a first API and a second camera application using a second API are stored, and a camera, the recording medium may include an instruction to request an operation of the camera to acquire a first image stream by the second camera application, based on a first camera identifier. The recording medium may further include an instruction to determine whether to provide the first image stream using a camera function which is executed by invoking the first API, based on first stream information related to the first image stream. The recording medium may further include an instruction to initiate the operation of the camera using a second camera identifier, based on determining that the first image stream is provided using the camera function. The recording medium may further include an instruction to provide the first image stream acquired using the camera function to the second camera application.

An electronic device and an operating method thereof according to the disclosed embodiments may provide various functions related to the camera of the electronic device without additional modification or structural change to an application related to the camera. According to the disclosed embodiments, there is provided an electronic device and an operating method which provide image data to which a specialized function supported by a native camera application is applied from a third-party camera application, without modifying the third-party camera application.

An electronic device and an operating method thereof according to the disclosed embodiments do not require additional modification to various applications related to the operation of a camera or structural change to a device, and the cost incurred by additional modification to applications or structural change may be prevented.

The effect achieved by the disclosure is not limited to those mentioned above, and other effects that are not mentioned above may be clearly understood to those skilled in the art based on the description provided below.

Methods according to the embodiments disclosed in the disclosure may be implemented in hardware, software, or a combination of both. When implemented in software, a computer readable storage medium for storing one or more programs (software modules) may be provided.

The one or more programs stored in the computer readable storage medium are configured for execution performed by one or more processors in an electronic device. The one or more programs include instructions for allowing the electronic device to execute the methods according to the embodiments disclosed in the disclosure.

The program (the software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs) or other forms of optical storage devices, and a magnetic cassette. Alternatively, the program may be stored in a memory configured in combination of all or some of these storage media. In addition, the configured memory may be plural in number.

Further, the program may be stored in an attachable storage device capable of accessing the electronic device through a communication network such as the Internet, an Intranet, a local area network (LAN), a wide LAN (WLAN), or a storage area network (SAN) or a communication network configured by combining the networks. The storage device may access via an external port to a device which performs the embodiments of the disclosure. In addition, an additional storage device on a communication network may access to a device which performs the embodiments of the disclosure.

In the above-described specific embodiments of the disclosure, elements included in the disclosure are expressed in singular or plural forms according to specific embodiments. However, singular or plural forms are appropriately selected according to presented situations for convenience of explanation, and the disclosure is not limited to a single element or plural elements. An element which is expressed in a plural form may be configured in a singular form or an element which is expressed in a singular form may be configured in plural number.

The term "unit" or "module" used in the disclosure refer to a hardware component such as a processor or a circuit, and/or a software component executed by a hardware component such as a processor.

A "unit", "module" may be implemented by a program that is stored in a storage medium which may be addressed, and is executed by a processor. For example, a "unit", "module" may be implemented by components such as software components, object-oriented software components, class components, and task components, processes, functions, attributes, procedures, sub-routines, segments of a program code, drivers, firmware, a micro code, a circuit, data, a database, data structures, tables, arrays and parameters.

Specific execution explained in the disclosure is merely an example, and the scope of the disclosure is not limited by any method. For the sake of clarity of the specification, descriptions of related-art electronic components, control systems, software, and other functional aspects of the systems are omitted.

In the disclosure, such phrase as "including at least one of a, b, or c" may refer to "including only a", "including only b", "including only c", "including a and b", "including b and c, "including a and c", "including all of a, b, c".

While specific embodiments have been described in the detailed descriptions of the disclosure, it will be understood by those skilled in the art that various changes in form and details may be made therein without departing from the spirit and scope of the disclosure. Therefore, the scope of the disclosure is defined not by explained embodiments but by the appended claims and equivalents to the claims.

## Claims

1. An electronic device comprising:
a camera;
at least one processor; and
a memory configured to store instructions, a first camera application using a first application programming interface (API) and a second camera application using a second API,
wherein, by being executed by the at least one processor, the instructions cause the electronic device to:
request initiating of an operation of the camera to acquire a first image stream from the second camera application, based on a first camera identifier;
determine whether to provide the first image stream using a camera function which is executed by invoking the first API, based on first stream information related to the first image stream;
initiate the operation of the camera using a second camera identifier, based on determining that the first image stream is provided using the camera function; and
provide the first image stream acquired using the camera function to the second camera application.

2. The electronic device of claim 1, wherein, by being executed by the at least one processor, the instructions cause the electronic device to:
provide temporary camera information to the second camera application, based on the first camera identifier; and
acquire the first stream information from the second camera application.

3. The electronic device of claim 2, wherein, by being executed by the at least one processor, the instructions cause the electronic device to:
operate the camera using the first camera identifier, based on determining that the first image stream is not provided using the camera function; and
provide the first image stream acquired without using the camera function to the second camera application.

4. The electronic device of claim 1, wherein, by being executed by the at least one processor, the instructions cause the electronic device to:
set a pre-defined shooting setting value for using the camera function for metadata related to the first image stream, according to a category of the first image stream identified from the first stream information; and
acquire the first image stream using the pre-defined shooting setting value set for the metadata.

5. The electronic device of claim 1, wherein, by being executed by the at least one processor, the instructions cause the electronic device to:
identify a first shooting setting value of first metadata related to the first image stream from the first stream information;
determine whether the first shooting setting value corresponds to a pre-defined second shooting setting value for using the camera function;
change the first shooting setting value to the second shooting setting value, based on determining that the first shooting setting value does not correspond to the second shooting setting value; and
acquire the first image stream using the second shooting setting value.

6. The electronic device of claim 5, wherein, by being executed by the at least one processor, the instructions cause the electronic device to:
identify a first shooting result value from second metadata of the first image stream which is acquired using the second shooting setting value;
change the first shooting result value to a second shooting result value such that the first shooting result value matches the first shooting setting value; and
provide the second metadata of the first image stream containing the second shooting result value to the second camera application.

7. The electronic device of claim 1, wherein, by being executed by the at least one processor, the instructions cause the electronic device to:
determine whether first metadata related to the first image stream contains pre-defined vendor key metadata for using the camera function;
change the first metadata to contain the vendor key metadata, based on determining that the first metadata does not contain the vendor key metadata; and
acquire the first image stream using the vendor key metadata.

8. The electronic device of claim 1, wherein, by being executed by the at least one processor, the instructions cause the electronic device to:
identify a first stream combination related to the first image stream from the first stream information;
determine whether the first stream combination corresponds to a pre-defined second stream combination for using the camera function;
change the first stream combination to the second stream combination, based on determining that the first stream combination does not correspond to the second stream combination; and
acquire the first image stream based on the second stream combination.

9. The electronic device of claim 8, wherein, by being executed by the at least one processor, the instructions cause the electronic device to:
acquire a second image stream by performing pre-set image processing with respect to the first image stream acquired based on the second stream combination; and
provide the second image stream to the second camera application, and
wherein the second image stream is acquired to match the first stream combination.

10. A computer-readable non-transitory recording medium on which an instruction to control an electronic device is recorded, the electronic device comprising a memory in which a first camera application using a first API and a second camera application using a second API are stored, and a camera, the recording medium comprising:
an instruction to request initiation of an operation of the camera to acquire a first image stream from the second camera application, based on a first camera identifier;
an instruction to determine whether to provide the first image stream using a camera function which is executed by invoking the first API, based on first stream information related to the first image stream;
an instruction to initiate the operation of the camera using a second camera identifier, based on determining that the first image stream is provided using the camera function; and
an instruction to provide the first image stream acquired using the camera function to the second camera application.

11. An operating method of an electronic device comprising a memory in which a first camera application using a first API and a second camera application using a second API are stored, and a camera, the method comprising:
requesting initiating of an operation of the camera to acquire a first image stream from the second camera application, based on a first camera identifier;
determining whether to provide the first image stream using a camera function which is executed by invoking the first API, based on first stream information related to the first image stream;
initiating the operation of the camera using a second camera identifier, based on determining that the first image stream is provided using the camera function; and
providing the first image stream acquired using the camera function to the second camera application.

12. The method of claim 11, further comprising:
providing temporary camera information to the second camera application, based on the first camera identifier; and
acquiring the first stream information from the second camera application.

13. The method of claim 12, further comprising:
operating the camera using the first camera identifier, based on determining that the first image stream is not provided using the camera function; and
providing the first image stream acquired without using the camera function to the second camera application.

14. The method of claim 11, further comprising:
setting a pre-defined shooting setting value for using the camera function for metadata related to the first image stream, according to a category of the first image stream identified from the first stream information; and
acquiring the first image stream using the pre-defined shooting setting value set for the metadata.

15. The method of claim 11, further comprising:
identifying a first shooting setting value of first metadata related to the first image stream from the first stream information;
determining whether the first shooting setting value corresponds to a pre-defined second shooting setting value for using the camera function;
changing the first shooting setting value to the second shooting setting value, based on determining that the first shooting setting value does not correspond to the second shooting setting value; and
acquiring the first image stream using the second shooting setting value.
